# EUROPEAN PATENT APPLICATION

(11) **EP 4 344 050 A1**
(43) Date of publication of application: **27.03.2024**
(21) Application number: 23741245.7
(22) Date of filing: 17.07.2023
(51) Int. Cl.: H02P 25/032, H02P 27/04, H02P 29/60

(54) **METHOD FOR CONTROLLING VIBRATION DEVICE, AND ELECTRONIC DEVICE SUPPORTING SAME**

(30) Priority: 22.07.2022 KR 20220091352; 09.08.2022 KR 20220099553
(71) Applicant: Samsung Electronics Co., Ltd., Suwon-si, Gyeonggi-do 16677 (KR)
(72) Inventor: LEE, Wookwang, Suwon-si, Gyeonggi-do 16677 (KR); BAE, Yudong, Suwon-si, Gyeonggi-do 16677 (KR); HONG, Sungmin, Suwon-si, Gyeonggi-do 16677 (KR)
(74) Representative: Nederlandsch Octrooibureau
(86) International application number: PCT/KR2023/010194
(87) International publication number: WO 2024/019453

(57) **Abstract**

An embodiment may provide an electronic device including a vibration device, at least one processor electrically connected to the vibration device, and a memory storing instructions, wherein the instructions, when executed by the at least one processor, cause the electronic device to increase or decrease a vibration frequency of the vibration device for a preconfigured time, acquire a resonant frequency of the vibration device based on a signal output from the vibration device, determine, as a driving frequency of the vibration device, a vibration frequency at which an output of the vibration device at a temperature higher than a room temperature is smaller than that at the room temperature, and control the vibration device so that the vibration device is driven at the determined driving frequency. Various other embodiments are possible.

## Description

### [Technical Field]

The disclosure relates to a method for controlling a vibration device and an electronic device for supporting same.

### [Background Art]

In accordance with recent rapid development in electronic devices, an electronic device capable of performing wireless voice call and providing various contents has been indispensable. An electronic device provides various contents, such as a remote controller using near-field communication and image photographing using a digital camera mounted therein so as to satisfy needs of users.

Specifically, the electronic device has become capable of transmitting more information by providing a content (e.g., vibration) to stimulate tactile senses in addition to a content to stimulate visual and auditory senses. The electronic device may include a vibration device and the vibration device may include a damping foam for preventing excessive vibration inside the vibration device. The vibration device may additionally include an elastic member for supporting the vibration device by providing restitution force when the vibration device vibrates.

For example, the vibration device may include a damping foam made of a polyurethane foam material. In case that the vibration device vibrates or an outer temperature of the electronic device increases, a temperature of the damping foam may increase as well. In case that a temperature of the damping foam made of a polyurethane foam material rises, viscosity and stiffness of the damping foam may be reduced. In case that stiffness of the damping foam is reduced, stress applied to the elastic member for supporting the inside of the vibration device may increase and thus excessive vibration may occur in the vibration device. The vibration device including the damping foam made of a polyurethane foam material may be damaged due to excessive vibration when temperature rises.

### [Detailed Description of the Invention]

### [Technical Solution]

An embodiment of the disclosure is to prevent damage to a vibration device at a high temperature by measuring a resonant frequency of the vibration device at a room temperature and determining a driving frequency of the vibration device based on the resonant frequency. However, the disclosure is not limited to the above description.

According to an embodiment of the disclosure, an electronic device may include a vibration device. The electronic device may include at least one processor electrically connected to the vibration device. The electronic device may include a memory storing instructions. The instructions, when executed by the at least one processor, may cause the electronic device to increase or decrease a vibration frequency of the vibration device for a preconfigured time. The instructions, when executed by the at least one processor, may cause the electronic device to acquire a resonant frequency of the vibration device based on a signal output from the vibration device while the vibration device vibrates at the increased or decreased vibration frequency. The instructions, when executed by the at least one processor, may cause the electronic device to determine, based on the resonant frequency, as a driving frequency of the vibration device 210, a vibration frequency at which an output of the vibration device at a temperature higher than the room temperature is smaller than that of the vibration device at the room temperature. The instructions, when executed by the at least one processor, may cause the electronic device to control the vibration device so that the vibration device is operated at the determined driving frequency.

According to an embodiment of the disclosure, an operation method of an electronic device may include an operation of increasing or decreasing a vibration frequency of a vibration device for a preconfigured time. The operation method of the electronic device may include an operation of acquiring a resonant frequency of the vibration device based on a signal output from the vibration device while the vibration device vibrates at the increased or decreased vibration frequency. The operation method of the electronic device may include an operation of determining, based on the resonant frequency, as a driving frequency of the vibration device, a vibration frequency at which an output of the vibration device at a temperature higher than the room temperature is smaller than that of the vibration device at the room temperature. The operation method of the electronic device may include an operation of controlling the vibration device so that the vibration device is operated at the determined driving frequency.

An embodiment of the disclosure may provide a non-transitory computer-readable recording medium storing instructions, wherein when executed by at least one circuit of an electronic device, the instructions may be for causing the at least one circuit to perform at least one operation. The at least one operation may include an operation of increasing or decreasing a vibration frequency of a vibration device for a preconfigured time. The least one operation may include an operation of acquiring a resonant frequency of the vibration device based on a signal output from the vibration device while the vibration device vibrates at the increased or decreased vibration frequency. The at least one operation may include an operation of determining, based on the resonant frequency, as a driving frequency of the vibration device, a vibration frequency at which an output of the vibration device at a temperature higher than the room temperature is smaller than that of the vibration device at the room temperature. The at least one operation may include an operation of controlling the vibration device so that the vibration device is operated at the determined driving frequency.

The technical solutions according to an embodiment of the disclosure are not limited to the above-described technical solutions other technical solutions which are not described can be clearly understood by those skilled in the art to which the disclosure pertains from the following description and the accompanying drawings.

### [Brief Description of Drawings]

FIG. 1 is a block diagram illustrating an electronic device in a network environment according to an embodiment of the disclosure.
FIG. 2 is a view illustrating an example of a configuration of an electronic device according to an embodiment of the disclosure.
FIG. 3 is a view illustrating an example of a section of a motor according to an embodiment of the disclosure.
FIG. 4 is a view illustrating a processor and a vibration device IC which are connected to different communication interfaces (e.g., an I2C bus and an I2S bus) according to an embodiment of the disclosure.
FIG. 5 is a view illustrating an example of a software configuration of an electronic device according to an embodiment of the disclosure.
FIG. 6 is a graph indicating amounts of vibration of a vibration device at a room temperature and at a temperature higher than the room temperature depending on vibration frequencies according to an embodiment of the disclosure.
FIG. 7 is a view illustrating an example of a waveform of a signal output from a vibration device in response to a vibration frequency according to an embodiment of the disclosure.
FIG. 8 is a flowchart illustrating a method for controlling a vibration device according to an embodiment of the disclosure.
FIG. 9 is a flowchart illustrating an example of an operation of acquiring a resonant frequency of a vibration device by an electronic device according to an embodiment of the disclosure.
FIG. 10 is a flowchart illustrating an example of an operation of determining a driving frequency of a vibration device by an electronic device according to an embodiment of the disclosure.
FIG. 11A is a view illustrating an example of changing of vibration force according to an operation of an electronic device according to an embodiment of the disclosure.
FIG. 11B is a view illustrating an example of changing of a driving voltage according to an operation of an electronic device according to an embodiment of the disclosure.
FIG. 12 is a graph illustrating an example of changing of vibration force according to a vibration frequency for each temperature according to an embodiment of the disclosure.
FIG. 13 is a flowchart illustrating an example of an operation of controlling a driving frequency of a vibration device based on acquisition of a driving temperature of the vibration device according to an embodiment of the disclosure.
FIG. 14 is a flowchart illustrating an example of an operation of controlling a driving voltage of a vibration device based on acquisition of a driving temperature of the vibration device according to an embodiment of the disclosure.
FIG. 15 is a flowchart illustrating an example of an operation of controlling a driving voltage of a vibration device to cause the vibration device to output a target vibration amount according to an embodiment of the disclosure.

### [Mode for Carrying out the Invention]

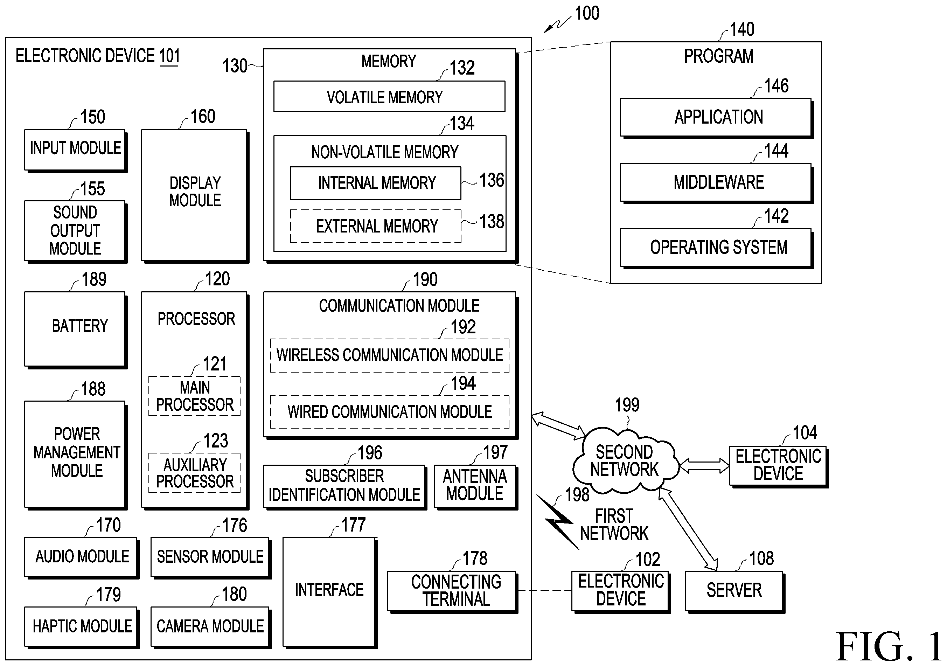

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one of the components (e.g., the connecting terminal 178) may be omitted from the electronic device 101, or one or more other components may be added in the electronic device 101. In an embodiment, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

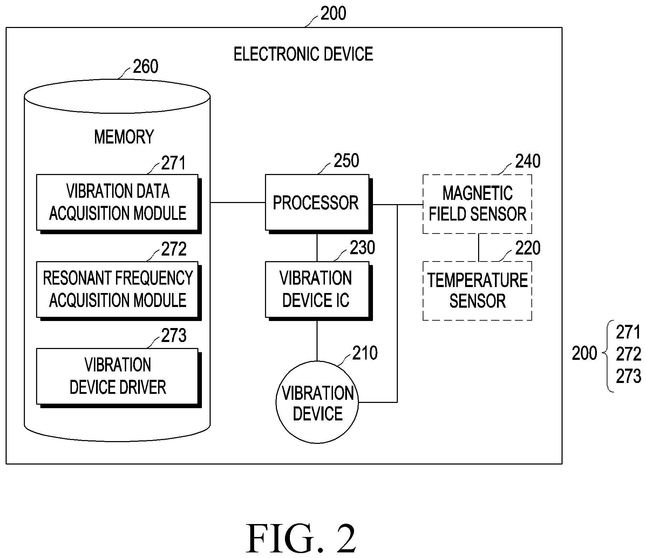

FIG. 2 is a view illustrating an example of a configuration of an electronic device 200 according to an embodiment of the disclosure.

Hereinafter, examples of the configuration of the electronic device 200 (e.g., the electronic device 101 in FIG. 1) according to an embodiment of the disclosure will be described.

Referring to FIG. 2, according to an embodiment, the electronic device 200 may include a vibration device 210 (e.g., the haptic module 179 in FIG. 1), a vibration device IC 230, a processor 250 (e.g., the processor 120 in FIG. 1), a temperature sensor 220 (e.g., the sensor module 176 in FIG. 1), a magnetic field sensor 240 (e.g., the sensor module 176 in FIG. 1), and a memory 260 including multiple modules 270 (e.g., a resonant frequency acquisition module 272, a vibration data acquisition module 271, and a vibration device driver 273). Without limitation to the configuration shown in FIG. 2, the electronic device 200 may be realized to include more components or fewer components. For example, the electronic device 200 may be realized to include components of the electronic device 101 described above with reference to FIG. 1. In an embodiment, without using the temperature sensor 220 or the magnetic field sensor 240, the electronic device 200 may measure a resonant frequency of the vibration device 210 and determine a driving frequency of the vibration device 210 based on the measured resonant frequency.

In an embodiment, the "resonant frequency" may indicate a frequency to maximize an intensity of a vibration amount output from the vibration device 210. In an embodiment, the "vibration frequency" may indicate a frequency input to the vibration device 210 to cause the vibration device 210 to vibrate. In an embodiment, the "driving vibration" may indicate a frequency to cause the vibration device 210 to actually drive. In an embodiment, the electronic device 200 may determine (or, set), as the driving frequency, a vibration frequency at which an output of the vibration device 210 at a temperature higher than the room temperature is smaller than that of the vibration device at the room temperature. In an embodiment of the present disclosure, those skilled in the art will easily understand that "determining" may include "controlling, adjusting, changing, and/or modifying" in case that the electronic device 200 change the frequency from the determined (or set) driving frequency. In an embodiment, the electronic device 200 may determine a size of an output of the vibration device 210 by acquiring a vibration amount output from the vibration device 210. In an embodiment of the present disclosure, those skilled in the art will easily understand that, "acquiring" may include "detecting, recognizing, determining, sensing, and/or identifying." In an embodiment, the electronic device 200 may determine a resonant frequency of the vibration device 210, which is measured at a room temperature, as the driving frequency of the vibration device 210. In an embodiment, the output of the vibration device 210 may be dependent on temperature. For example, the vibration device 210 may include a damping foam, preferably made of a polyurethane foam material. In case that a temperature of the damping foam rises, viscosity and stiffness of the damping foam may be reduced. In case that stiffness of the damping foam is reduced, excessive vibration may occur in the vibration device. Such excessive vibration may damage the vibration device 210 and should therefore be prevented.

Hereinafter, an example of a configuration of an electronic device 200 according to an embodiment will be described.

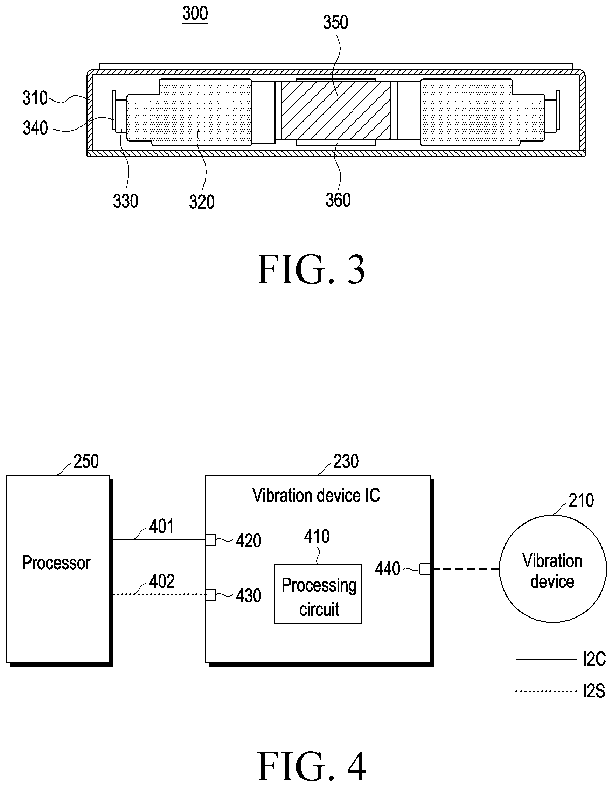

In an embodiment, the vibration device 210 may vibrate by operating based on data (e.g., pulse width modulation (PWM) data) received from the vibration device IC 230. The vibration of the vibration device 210 may cause the electronic device 200 including the vibration device 210 to vibrate. A user may receive vibration feeling through the vibration of the electronic device 200. A configuration of the vibration device 210 will be described with reference to FIG. 3.

In an embodiment, the temperature sensor 220 may be electrically connected to the vibration device 210 and acquire a driving temperature of the vibration device 210. The temperature sensor 220 may transfer the acquired driving temperature to the modules 270 (e.g., the resonance frequency acquisition module 272).

In an embodiment, the vibration device IC 230 may control the vibration device 210 to cause the vibration device 210 to generate vibration by using a processing circuit 310. In an embodiment, the vibration device IC 230 may acquire (or generate) data (e.g., PWM data) for controlling the vibration device 210 based on processing, by using the processing circuit, at least one of multiple pieces of data received from the processor 250 through multiple communication interfaces (e.g., an I2C bus and an I2S bus) based on a program (e.g., firmware) stored in the memory 260. In an embodiment, based on a driving frequency of the vibration device 210 received from processor 250, the vibration device IC 230 may acquire (or generate) data (e.g., PWM data) corresponding to the driving frequency.

In an embodiment, the magnetic field sensor 240 may be electrically connected to the vibration device 210 and acquire strength of a magnetic field output from the vibration device 210. The magnetic field sensor 240 may convert the acquired strength of the magnetic field into the form of voltage. The magnetic field sensor 240 may transfer a size of the converted voltage to the modules 270 (e.g., the resonance frequency acquisition module 272).

In an embodiment, the processor 250 may be included in the processor 120 in FIG. 1. In an embodiment, the processor 250 may control the overall operation to acquire a resonant frequency of the vibration device 210 and determine the driving frequency of the vibration device 210. In an embodiment, the processor 250 may include one or more processors to acquire the resonant frequency of the vibration device 210. The operation by the processor 250 for acquiring the resonant frequency and determining the driving frequency will be described below with reference to FIG. 3 to FIG. 15.

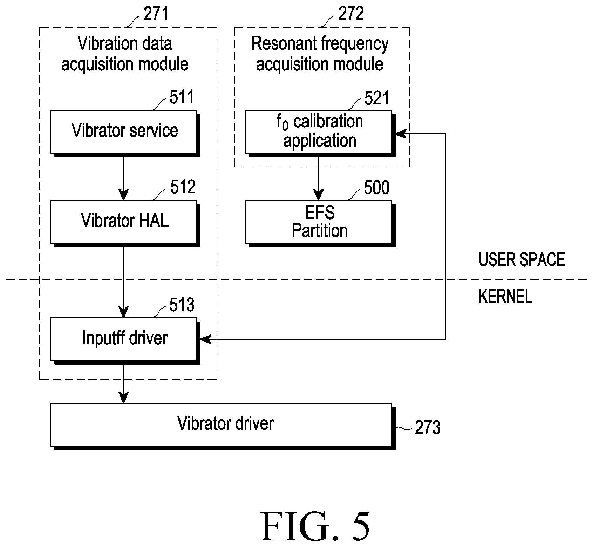

In an embodiment, the memory 260 may be included in the memory 130 in FIG. 1. In an embodiment, the memory 260 may store the modules 270 (e.g., the vibration data acquisition module 271, the resonant frequency acquisition module 272, and the vibration device driver 273) for performing the operation of acquiring the resonant frequency of the vibration device 210 and the operation of determining the driving frequency of the vibration device 210. In an embodiment, the memory 260 may store instructions. The instructions, when executed by the processor 250, may cause the electronic device 200 to perform at least one operation. The modules 270 stored in the memory 260 will be described below with reference to FIG. 5.

FIG. 3 is a view illustrating an example of a section of a motor 300 according to an embodiment of the disclosure. Hereinafter, the motor 300 will be described with reference to FIG. 3.

Referring to FIG. 3, the motor 300 (e.g., the haptic module 179 in FIG. 1, or the vibration device 210 in FIG. 2) may include a case 310, a weight 320, a damping foam 330, an elastic member 340 (e.g., a spring), a magnet 350, and a coil 360.

In an embodiment, the case 310 may support the appearance of the motor 300 and protect internal components of the motor 300 from being damaged. The weight 320 may be fixed to the case 310 by the elastic member 340. The weight 320 may perform linear movement due to an interaction between a magnetic field generated by a current flowing along the coil 360 and the magnet 350. A weight of the weight 320 and a resonant frequency of the motor 300 are inversely proportional and thus the weight of the weight 320 may be variously changed in consideration of the resonant frequency of the motor 300.

In an embodiment, the damping foam 330 may be provided between the weight 320 and the elastic member 340 and may prevent contact between the weight 320 and the elastic member 340. In an embodiment, the damping foam 330 may be made of a polyurethane foam material. The damping foam 330 including a polyurethane foam material may be reduced in stiffness when a temperature increases and thus stress applied to the elastic member 340 may increase. In case that the stress applied to the elastic member 340 is excessively increased, the motor 300 may be damaged. In an embodiment, in order to prevent the motor 300 from damage at a high temperature, the electronic device 200 may acquire a resonant frequency of the motor 300 and determine a driving frequency of the motor 300 based on the acquired resonant frequency. An operation of the electronic device 200 related to the resonant frequency acquisition and the driving frequency determination will be described below.

In an embodiment, the motor 300 may resonate at a specific frequency. The motor 300 may resonate at a resonant frequency. For example, the resonant frequency of the motor 300 may correspond to a frequency to maximize the vibration amount of the motor 300 when the motor 300 vibrates. The resonant frequency of the motor 300 may be proportional to a spring constant of the elastic member 340 and inversely proportional to a weight of the weight 320. For example, as the stiffness of the elastic member 340 is greater, the resonant frequency of the motor 300 may increase, and as the weight of the weight 320 is greater, the resonant frequency of the motor 300 may be reduced.

The elastic member 340 may elastically support the weight 320 to stably perform linear movement. A spring constant of the elastic member 340 is inversely proportional to a resonant frequency of the motor 300 and thus the stiffness of the elastic member 340 may be variously changed in consideration of the resonant frequency of the motor 300.

The magnet 350 may provide to the weight 320 a magnetic field generated by an interaction with a current flowing along the coil 360.

The coil 360 may receive a current from a power supply device (e.g., the battery 189) and generate a magnetic field around a conducting wire. The weight 320 may perform linear movement in a direction perpendicular to a direction of a current flowing along the coil 360 and a direction of the magnetic field of the magnet 350. Without limitation to the configuration shown in FIG. 3, the motor 300 may be realized to include more components or fewer components. For example, the motor 300 may be realized to further include a metal pin (not shown) to further strengthen the magnetic field generated by the magnet 350.

Referring to Fig. 3, the motor 300 may be a horizontal linear vibration motor vibrating by the weight 320 performing horizontal linear movement. In an embodiment, the vibration device 210 may include various types of vibration motors. For example, the vibration device 210 may include a vertical linear vibration motor vibrating by the weight performing a vertical linear movement. The various types of vibration motors may have similar temperature dependencies. In an embodiment, the various types of vibration motors comprise the damping foam 330. It is well known technology that the vibration device 210 may be variously realized without limitation to the above-described example and thus a more detailed description will be omitted.

FIG. 4 is a view illustrating a processor 250 and a vibration device IC 230 which are connected to different communication interfaces (e.g., an I2C bus 401 and an I2S bus 402) according to an embodiment.

Hereinafter, the processor 250 and the vibration device IC 230 according to an embodiment will be described.

In an embodiment, the processor 250 may transfer data (e.g., a driving frequency and a driving voltage) related to a driving signal of the vibration device 210 to the vibration device IC 230 through at least one of multiple buses (e.g., the I2C bus 401 and I2S bus 402).

In an embodiment, the vibration device IC 230 may include a memory (not shown), a control circuit (not shown), multiple terminals 420, 430, and 440, and a processing circuit 410 realized (or configured) to processing multiple pieces of data received from the processor 250 and generate control data for driving the vibration device 210.

In an embodiment, the processing circuit 410 may include a digital signal processing (DSP) circuit, a circuit corresponding to a specific coder (e.g., a codec or a decodec), and/or an amp for converting input data into a data for generating vibration. In an embodiment, the data for vibration generation may include at least one of serial data (SDA) or open wave table (OWT) data. In an embodiment, the memory may store a program (e.g., firmware and/or software) for overall control of the vibration device IC 230. In an embodiment, the processor 250 may execute the firmware to control the vibration device IC 230 to process multiple pieces of data acquired from the processor 250 by using the processing circuit 310. By processing the acquired multiple pieces of data, the vibration device IC 230 may acquire (or generate) data (e.g., PWM data) for driving the vibration device 210. The firmware of the vibration device IC 230 may be executed in case that the electronic device 200 is booted (or turned on). The vibration device IC 230 may drive the vibration device 210 (e.g., the motor 300) based on the acquired data (e.g., PWM data) for vibration generation. The vibration device 210 may vibrate in response to the data for vibration generation. In an embodiment, the vibration device IC 230 may transfer the generated data (e.g., PWM data) for vibration generation through an output terminal 440 connected to the vibration device 210 and the vibration device 210 (e.g., the motor 300) may be driven based on the received data (e.g., PWM data).

In an embodiment, the multiple terminals 420, 430, and 440 may include terminals 420 and 430 connected to multiple communication interfaces 401 and 402 for connecting the processor 250 and the vibration device IC 230 and a terminal 440 for connecting the vibration device IC 230 and the vibration device 210. In an embodiment, referring to FIG. 4, the multiple communication terminals 401 and 402 may include multiple buses (e.g., an inter integrated circuit (I2C) bus 401 and an integrated interchip sound (I2S) bus 402). The multiple terminals may include the I2C terminal 420 connected to the I2C bus 401 and the I2S terminal 430 connected to the I2S bus 402. The vibration device IC 230 may be electrically connected to the processor 250 through the I2C bus 401 connected to the I2C terminal 420 and the I2S bus 402 connected to the I2S terminal 430. The multiple terminals may include an output terminal 440 connected to the vibration device 210. Data (e.g., PCM data) for driving the vibration device 210 may be transferred through the output terminal 440.

In an embodiment, the I2C bus 401 may be a serial bus for data transmission and/or data reception between the processor 250 and other electronic components (e.g., the vibration device IC 230) in the electronic device 200. In an embodiment, the I2C bus 401 may include two lines (not shown) and may include, for example, a serial clock (SCL) line and a serial data (SDA) line. A clock signal for synchronization may be output from the processor 250 to the electronic components through the SCL. Time data (e.g., SDA data) corresponding to the clock signal may be transmitted and/or received between the processor 250 and the electronic components through the SDA line. In an embodiment, the vibration device IC 230 may receive a driving frequency of the vibration device 210 through the I2C bus 401. In an embodiment, the received driving frequency may be a frequency of a driving signal, which is acquired (or generated) by the vibration device IC 230 for driving the vibration device 210.

In an embodiment, the I2S bus 402 may be a serial bus for audio data transmission and/or audio data reception between the processor 250 and other electronic components (e.g., the vibration device IC 230) in the electronic device 200. The audio data may include PCM data. In an embodiment, the I2S bus 402 may include three lines (not shown) and may include, for example, a serial clock (SCK), word select (WS), and a serial data (SD). A clock signal for synchronization may be output from the processor 250 to the electronic components through the SCK. A word selecting signal may be transmitted to the processor 250 and the electronic components through the WS. Audio data may be transmitted from the processor 250 to the electronic components through the SD. In this case, the transmission may be unidirectional. For example, A2H data and/or ACH data may be transferred from the processor 250 to the vibration device IC 230 through the I2S bus 402.

In an embodiment, types of data transferred through the I2C bus 401 and types of data transferred through the I2S bus 402 may be different from each other.

In an embodiment, data received through the I2C bus 401 and data received through the I2S bus 402 may further include various types of data signals for driving the vibration device 220. For example, the types of data transmittable through the I2S bus 402 may further include types of data which may be acquired based on other types of content other than audio, such as image data, in addition to audio data (e.g., PCM data).

FIG. 5 is a view illustrating an example of a software configuration of an electronic device 200 according to an embodiment.

Hereinafter, the processor 250 and programs (e.g., the modules 270 in FIG. 2) executed by the processor 250 will be described.

In an embodiment, the processor 250 may be included in the processor 120 in FIG. 1. In an embodiment, at least one processor may include the processor 250 and the vibration device IC 230.

In an embodiment, the modules 270 (e.g., the resonant frequency acquisition module 272, the vibration data acquisition module 271, and the vibration device driver 273 in FIG. 2) realized (or stored) in the electronic device 200 may be realized in the form of applications, programs, computer codes, instructions, routines, processes, software, firmware, or a combination of at least two thereof, which is executable by the processor 250. For example, the modules 270 may be realized as at least a portion of the program 140 in FIG. 1. In an embodiment, the processor 270 may correspond to the program 140 in FIG. 1. For example, in case that the modules 270 (e.g., the resonant frequency acquisition module 272, the vibration data acquisition module 271, and the vibration device driver 273) are executed, the processor 250 may perform an operation corresponding to each module. In an embodiment of the disclosure, the description that "the module performs an operation" may be understood as the processor 250 performing an operation corresponding to the module according to execution of the module. At least a portion of the modules 270 (e.g., the resonant frequency acquisition module 272, the vibration data acquisition module 271, and the vibration device driver 273) may include multiple programs. The modules 270 are not limited to the above-described example. In an embodiment, at least a portion of the modules 270 may be realized in the form of hardware (e.g., the processing circuit 410).

In an embodiment, the vibration data acquisition module 271 may be realized to acquire (or generate) data for vibration generation in case that an event for providing vibration occurs in the electronic device 200. The vibration data acquisition module 271 may be realized to control the processor 250 to transfer the data for vibration generation to the vibration device IC 230 through the I2C bus 401. In an embodiment, the event (hereinafter, "vibration event") is an event preconfigured for vibration generation in the electronic device 200 and may be an event realized to generate vibration having a specific property (e.g., a specific size or a specific pattern). The pattern may be a size of the vibration over time. In an embodiment, a module (not shown) (e.g., a window manager) for managing an event may manage information on the vibration event.

Referring to FIG. 5, in an embodiment, the vibration data acquisition module 271 may include a vibrator service module 511, a vibrator HAL module 512, and an input force feedback (InputFF) driver 513.

In an embodiment, the vibrator service module 511 may acquire at least one of a value indicating a vibration size and a value indicating a vibration effect based on at least one function (e.g., application programming interface (API)), based on occurrence of the vibration event related to an application (e.g., a notification application or a phone call application).

In an embodiment, the vibrator HAL module 512 may transfer at least one of the acquired value indicating a vibration size and value indicating a vibration effect to the InputFF driver 513 realized in a kernel (e.g., a Linux kernel) In an embodiment, the vibrator HAL module 512 may acquire a resonant frequency (or a driving frequency) value of the vibration device 210 stored in an EFS partition 500. The vibrator HAL module 512 may transfer the acquired resonant frequency value of the vibration device 210 to the InputFF driver 513 realized in a kernel (e.g., a Linux kernel). The InputFF driver 513 may transfer the resonant frequency value to the vibration device driver 273 so that the processor 250 transfer the acquired resonant frequency value to the vibration device 230 through the I2C bus 301. In an embodiment, the vibrator HAL module 512 may transfer the acquired resonant frequency value of the vibration device 210 to the vibration device driver 273. The vibrator HAL module 512 may request driving of the vibration device 210 to the vibration device driver 273 so that the vibration device 210 vibrates according to a driving frequency stored in the EFS partition 500.

In an embodiment, the InputFF driver 513 may transmit or receive an instruction for resonant frequency calibration with the vibration device driver 273. The InputFF driver 513 may trigger a f₀ calibration application 521 included in the resonant frequency acquisition module 272 to acquire (or measure) a resonant frequency of the vibration device 210. The InputFF driver 513 may acquire the resonant frequency of the vibration device 210 acquired by the resonant frequency acquisition module 272 through the vibrator HAL 512.

The EFS partition 500 is a portion of the memory (e.g., internal memory 136 in FIG. 1), and may store the resonant frequency (or the driving frequency) of the vibration device 210 acquired by the resonant frequency acquisition module 272. In an embodiment, an operation of the resonant frequency acquisition module 272 acquiring the resonant frequency of the vibration device 210 may be referred to as "resonant frequency calibration".

In an embodiment, the resonant frequency acquisition module 272 may be realized to acquire (or generate) the resonant frequency of the vibration device 210 through communication with the InputFF driver 513. The resonant frequency acquisition module 272 may be realized to determine, based on the acquired resonant frequency, as a driving frequency of the vibration device 210, a vibration frequency at which an output of the vibration device 210 at a temperature higher than the room temperature is smaller than that of the vibration device at the room temperature. The resonance frequency acquisition module 272 may be realized to control the processor 250 to transfer the resonant frequency (or the driving frequency) to the vibration device IC 230 through the I2C bus 401.

Referring to FIG. 5, in an embodiment, the resonant frequency acquisition module 272 may include the f₀ calibration application 521. For example, the f₀ calibration application 521 may execute firmware for calibration as the InputFF driver 513 triggers resonant frequency calibration.

The f₀ calibration application 521 may acquire a resonant frequency by performing calibration for increasing or decreasing a vibration frequency of the vibration device 210. In an embodiment, the f₀ calibration application 521 may increase or decrease the resonant frequency of the vibration device 210 for a preconfigured time (e.g., a sweep time) and may acquire the resonant frequency of the vibration device 210 based on a signal (e.g., a back-electromotive force, an impedance, or a magnetic field) output from the vibration device 210 while the vibration device 210 vibrates at the increased or decreased vibration frequency. In an embodiment, the f₀ calibration application 521 may acquire a vibration frequency for maximizing a size of a vibration amount output from the vibration device 210 as the resonant frequency while the vibration device 210 vibrates at the increased or decreased vibration frequency. In an embodiment, the f₀ calibration application 521 may acquire a vibration frequency for maximizing a size of a back-electromotive force output from the vibration device 210 as the resonant frequency while the vibration device 210 vibrates at the increased or decreased vibration frequency. In an embodiment, the f₀ calibration application 521 may acquire, by using the magnetic field sensor 240, a vibration frequency maximizing a size of a magnetic field output from the vibration device 210 as the resonant frequency while the vibration device 210 vibrates at the increased or decreased vibration frequency. The f₀ calibration application 521 may store the acquired resonant frequency in the EFS partition 500.

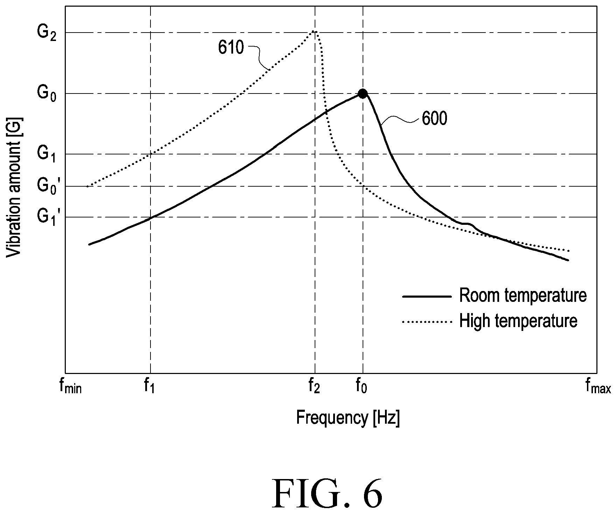

The resonant frequency acquisition module 272 may determine, based on the acquired resonant frequency, as a driving frequency of the vibration device 210, a vibration frequency at which an output of the vibration device 210 at a temperature higher than the room temperature is smaller than that of the vibration device at the room temperature and store the determined driving frequency in the EFS area 500. A detailed example in which the resonant frequency acquisition module 272 determines the driving frequency of the vibration device 210 will be described below with reference to FIG. 6.

In an embodiment, the resonant frequency acquisition module 272 may determine (or adjust) a driving frequency or a driving voltage of the vibration device 210 in response to acquisition of a driving temperature of the vibration device 210.

In an embodiment, the resonant frequency acquisition module 272 may acquire a driving temperature of the vibration device 210. For example, the resonant frequency acquisition module 272 may acquire the driving temperature of the vibration device 210 by using the temperature sensor 220 while the vibration device 210 vibrates. The resonant frequency acquisition module 272 may determine a driving frequency change value of the vibration device 210 based on a pre-stored table including a frequency (or, "table of frequency") for each temperature. For example, the resonant frequency acquisition module 272 may refer to the table including a frequency for each temperature pre-stored in the memory 260 in response to the acquisition of the driving temperature. The table including a frequency for each temperature may correspond to data expressing a relationship between a driving frequency for each temperature and a vibration amount of the vibration device 210 in the form of a table. In case that a vibration frequency smaller than the resonant frequency of the vibration device 210 at a room temperature is determined as the driving frequency, the resonant frequency acquisition module 272 may determine a driving frequency so that the driving frequency is reduced in proportion to an increase in the driving temperature with respect to the room temperature. In this example, the difference between the determined driving frequency and the resonant frequency of the vibration device 210 at a room temperature may be inversely proportional to the difference between the driving temperature and the room temperature. The resonant frequency acquisition module 272 may control the vibration device 210 so that the vibration device 210 is driven at the driving frequency to which the determined driving frequency change value has been applied. In an embodiment, the resonant frequency acquisition module 272 may transfer the driving frequency to which the determined driving frequency change value has been applied to the vibration device IC 230. The vibration device IC 230 may acquire (or generate) a driving signal of the vibration device 210 based on the acquired driving frequency. The vibration device 210 may vibrate at the driving frequency according to the acquired driving signal. The resonant frequency acquisition module 272 may maintain vibration force of the vibration device 210 to be constant even at a high temperature by reducing the driving frequency in proportion to an increase in the driving temperature of the vibration device 210.

In an embodiment, the resonant frequency acquisition module 272 may determine a driving voltage change value of the vibration device 210 based on a pre-stored table including a voltage (or, "table of voltage") for each temperature. In an embodiment, the resonant frequency acquisition module 272 may refer to the table including a voltage for each temperature pre-stored in the memory 260 in response to acquisition of the driving temperature. The table including a voltage for each temperature may correspond to data expressing a relationship between a driving frequency for each temperature and a driving voltage of the vibration device 210 in the form of a table. In case that a vibration frequency smaller than the resonant frequency of the vibration device 210 at a room temperature is determined as the driving frequency, the resonant frequency acquisition module 272 may determine a driving frequency so that the driving voltage is reduced in proportion to an increase in the driving temperature with respect to the room temperature. The resonant frequency acquisition module 272 may control the vibration device 210 so that the vibration device 210 is driven according to the driving voltage to which the determined driving voltage change value has been applied. In an embodiment, the resonant frequency acquisition module 272 may transfer the driving voltage to which the determined driving voltage change value has been applied to the vibration device IC 230. The vibration device IC 230 may acquire (or generate) a driving signal of the vibration device 210 based on the acquired driving voltage. The vibration device 210 may vibrate at the driving voltage according to the acquired driving signal. The resonant frequency acquisition module 272 may maintain vibration force of the vibration device 210 to be constant even at a high temperature by reducing the driving voltage in proportion to an increase in the driving temperature of the vibration device 210.

In an embodiment, the resonant frequency acquisition module 272 may determine (or adjust) a driving voltage of the vibration device 210 in response to acquisition of the driving temperature of the vibration device 210 and the vibration amount output from the vibration device 210. The resonant frequency acquisition module 272 may acquire the driving temperature of the vibration device 210. In an embodiment, the resonant frequency acquisition module 272 may acquire the driving temperature of the vibration device 210 by using the temperature sensor 220 while the vibration device 210 vibrates. The resonant frequency acquisition module 272 may determine a driving voltage change value of the vibration device 210 based on a pre-stored table including a voltage for each temperature. In an embodiment, the resonant frequency acquisition module 272 may refer to the table including a voltage for each temperature pre-stored in the memory 260 in response to acquisition of the driving temperature. In case that a vibration frequency smaller than the resonant frequency of the vibration device 210 at a room temperature is determined as the driving frequency, the resonant frequency acquisition module 272 may determine (or adjust) the driving frequency so that the driving voltage is reduced in proportion to an increase in the driving temperature with respect to the room temperature. The resonant frequency acquisition module 272 may acquire the vibration amount output from the vibration device 210 in response to the driving voltage to which the determined driving voltage change value has been applied. For example, the resonant frequency acquisition module 272 may acquire an electrical signal incurred by vibration of the vibration device 210, by using an acceleration sensor (not shown) (e.g., the sensor module 176 in FIG. 1) and acquire a vibration amount of the vibration device 210 based on the electrical signal. In an embodiment, the resonant frequency acquisition module 272 may acquire a back-electromotive force or an impedance of the vibration device 210 and acquire a vibration amount. The resonant frequency acquisition module 272 may determine a driving voltage for causing the vibration device 210 to output a target vibration amount based on the acquired vibration amount. In an embodiment, in case that a vibration amount the vibration device 210 increases compared to the target vibration amount, the resonant frequency acquisition module 272 may reduce a driving voltage of the vibration device 210 in proportion to an increase in the vibration amount with respect to the target vibration amount. The resonant frequency acquisition module 272 may transfer the reduced driving voltage to the vibration device IC 230. The vibration device IC 230 may acquire (or generate) a driving signal of the vibration device 210 based on the acquired driving voltage. The vibration device 210 may vibrate at the driving voltage according to the acquired driving signal. The resonant frequency acquisition module 272 may maintain vibration force of the vibration device 210 to be constant even at a high temperature by reducing the driving voltage in proportion to an increase in a vibration amount of the vibration device 210.

In an embodiment, the vibration device driver 273 may be realized to control the processor 250 to transfer predetermined data to the vibration device IC 230 through the multiple communication interfaces (e.g., the I2C bus 401 and the I2S bus 402). In an embodiment, the vibration device driver 273 may be realized in the form of a multi-function device (MFD) driver. In an embodiment, the vibration device driver 273 may configure a resonant frequency (or a driving frequency) acquired from the vibration data acquisition module 271 (e.g., the vibrator HAL module 512) as a driving frequency of the vibration device 210. In an embodiment, the vibration device driver 273 may store an instruction to cause the processor 250 to transfer a resonant frequency (or a driving frequency) of the vibration device 210 acquired from the vibration data acquisition module 271 (e.g., the Inputff driver 513) to the vibration device IC 230 through the I2C bus 401. In an embodiment, the vibration device IC 230 may drive the vibration device 210 so that the vibration device 210 vibrates at the driving frequency based on the driving frequency of the vibration device 210 acquired from the processor 250.

FIG. 6 is a graph indicating amounts of vibration of a vibration device 210 at a room temperature and at a temperature higher than the room temperature depending on vibration frequencies according to an embodiment.

Referring to FIG. 6, a graph 600 of amounts of vibration output from the vibration device 210 at a room temperature according to vibration frequencies and a graph 610 of amounts of vibration output from the vibration device 210 at a high temperature according to vibration frequencies are illustrated. In an embodiment, a resonant frequency f₂ at a high temperature may be smaller than a resonant frequency f₀ at a room temperature. The maximum amount G₂ of vibration at a high temperature may be greater than the maximum amount G₀ of vibration at a room temperature. In an embodiment, the high temperature is higher than the room temperature and may correspond to a temperature condition to cause damage to the vibration device 210 due to the vibration device 210 vibrating at the maximum vibration amount.

Referring to a curve 600 of amounts of vibration output from the vibration device 210 at a room temperature in FIG. 6, in an embodiment, in case that the vibration device 210 vibrates at the resonant frequency f₀ at a room temperature, the maximum amount G₀ of vibration may be output. In an embodiment, the maximum amount G₂ of vibration of the vibration device 210 at a high temperature may be greater than the maximum amount G₀ of vibration of the vibration device 210 at a room temperature.

In an embodiment, in case that the electronic device 200 (e.g., the processor 250) determines a frequency f₁ lower than the resonant frequency at a room temperature as the driving frequency of the vibration device 210 by using resonant frequency acquisition module 272, the vibration device 210 at a room temperature may output a vibration amount G₁' corresponding to the determined driving frequency. In case that the vibration device 210 is driven at the same frequency f₁ as at a room temperature even at a high temperature, the vibration device 210 may output an amount G₁ of vibration at a high temperature, which is greater than an amount G₁' of vibration output at a room temperature.

In an embodiment, the electronic device 200 (e.g., the processor 250) may determine, as the driving frequency of the vibration device 210, a vibration frequency (e.g., the resonant frequency f₀) at which an output (e.g., G₀') of the vibration device 210 at a temperature higher than the room temperature is smaller than an output G₀ at the room temperature based on the resonant frequency f₀ of the vibration device 210. In an embodiment, in case that the processor 250 determines a resonant frequency f₀ of the vibration device 210 at a room temperature lower as the driving frequency of the vibration device 210 by using resonant frequency acquisition module 272, the vibration device 210 may output a vibration amount G₀ corresponding to the determined driving frequency f₀ at a room temperature. In case that the vibration device 210 is driven at the resonant frequency f₀ at a room temperature even at a high temperature, the vibration device 210 at a high temperature may output an amount G₀' of vibration smaller than an amount G₀ of vibration output at a room temperature. In an embodiment, in case that the processor 250 determines a frequency greater than the resonant frequency f₀ as the driving frequency of the vibration device 210, even if the temperature is higher than room temperature, the vibration device 210 may output a vibration amount smaller than the maximum amount G₀ of vibration at a room temperature. In an embodiment, the electronic device 200 (e.g., the processor 250) may prevent the vibration device 210 from damage due to an increase of the vibration amount at a high temperature by controlling the vibration device 210 to vibrate at the determined driving frequency.

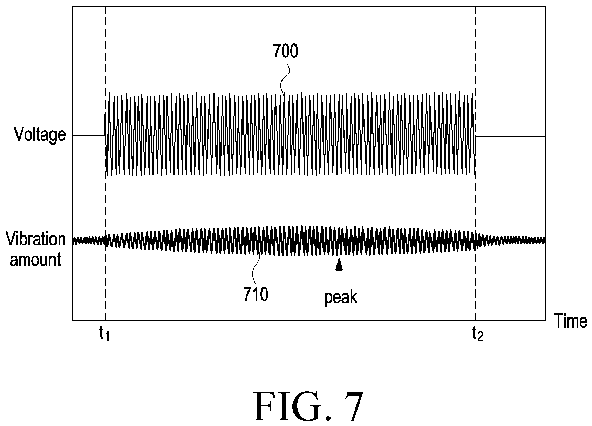

FIG. 7 is a view illustrating an example of a waveform of a signal output from a vibration device in response to a vibration frequency according to an embodiment of the disclosure.

Hereinafter, with reference to FIG. 7, an example in which the electronic device 200 (e.g., the processor 250) acquires a resonant frequency of the vibration device 210 by using a frequency sweep method will be described. In an embodiment, the "frequency sweep method" may be a method for acquiring a resonant frequency (e.g., f₀ in FIG. 6) of the vibration device 210 by continuously increasing or decreasing a vibration frequency of the vibration device 210. In an embodiment, the frequency sweep method may include an up-sweep method or a down-sweep method. In an embodiment, the "up-sweep method" may be a method for acquiring a resonant frequency of the vibration device 210 by continuously increasing a vibration frequency of the vibration device 210. The "down-sweep method" may be a method for acquiring a resonant frequency of the vibration device 210 by continuously decreasing a vibration frequency of the vibration device 210. In an embodiment, the resonant frequency measured by the up-sweep method or the down-sweep method may be measured differently from the real resonant frequency (e.g., f₀ in FIG. 6) due to a response time of the vibration device 210. For example, the resonant frequency measured by the up-sweep method may be a frequency having a value greater than a value (e.g., f₀ in FIG. 6) of the real resonant frequency of the vibration device 210.

In an embodiment, while the vibration frequency of the vibration device 210 continuously increases or decreases from time ti to time t₂, a waveform 700 of a voltage supplied to the vibration device 210 and a waveform 710 of a vibration amount output from the vibration amount may be indicated as shown in FIG. 7. In an embodiment, a "sweep time" may be a time in which the vibration device 210 vibrates according to the increased or decreased vibration frequency. For example, the time from time ti to time t₂ may be referred to as the "sweep time." The sweep time may be changed in consideration of at least one of an error of the measured resonant frequency of the vibration device 210 and a total time required for resonant frequency measurement operation. In an embodiment, a size of a voltage supplied to the vibration device 210 may be constantly maintained from time ti to time t₂ regardless of the vibration frequency of the vibration device 210. In an embodiment, time ti may be a time point to start a frequency sweep. The vibration frequency input to the vibration device 210 at time ti may correspond to a preconfigured minimum vibration frequency (e.g., fₘᵢₙ in FIG. 6) or a preconfigured maximum vibration frequency (e.g., fₘₐₓ in FIG. 6). In an embodiment, time t₂ may be a time point to end a frequency sweep. The vibration frequency input to the vibration device 210 at time t₂ may correspond to a maximum vibration frequency (e.g., fₘₐₓ in FIG. 6) or a minimum vibration frequency (e.g., fₘᵢₙ in FIG. 6). In an embodiment, by using the up-sweep method, the electronic device 200 (e.g., the processor 250) may increase the vibration frequency of the vibration device 210 from the minimum frequency to the maximum frequency during a time from time ti to time t₂ and acquire a resonant frequency for maximizing the mount of vibration of the vibration device 210. In an embodiment, by using the down-sweep method, the electronic device 200 (e.g., the processor 250) may decrease the vibration frequency of the vibration device 210 from the maximum frequency to the minimum frequency during a time from time ti to time t₂ and acquire a resonant frequency for maximizing the mount of vibration of the vibration frequency 210. In an embodiment, a vibration amount output from the vibration device 210 may have a maximum value at a time point when a specific vibration frequency (peak) is input while the vibration frequency of the vibration device 210 increases or decreases. In an embodiment, the vibration frequency (peak) for making a size of the vibration amount output from the vibration device 210 to be maximum may be the resonant frequency (e.g., f₀ in FIG. 6).

In an embodiment, in order to prevent the vibration device 210 from damage at a high temperature, the electronic device 200 (e.g., the processor 250) may acquire (or measure) a resonant frequency of the vibration device 210 at a room temperature and determine a driving frequency of the vibration device 210 based on the acquired resonant frequency. In an embodiment, the resonant frequency of the vibration device 210 may be a resonant frequency measured under a temperature (e.g., a temperature at which a user usually uses the electronic device 200) condition different from the room temperature.

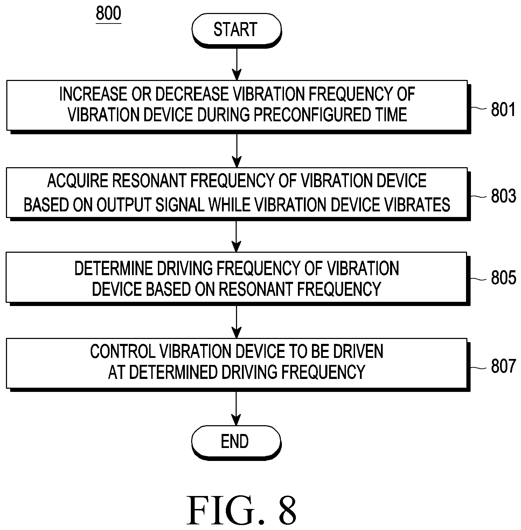

FIG. 8 is a flowchart 800 illustrating a method for controlling a vibration device 210 according to an embodiment of the disclosure.

In an embodiment, the operations shown in FIG. 8 are not limited to the described order and may be performed in various orders. In an embodiment, more operations or fewer than those shown in FIG. 8 may be performed.

In an embodiment, in operation 801, the electronic device 200 may increase or decrease a vibration frequency of the vibration device 210 during a predetermined time (e.g., a sweep time). In an embodiment, the electronic device 200 (e.g., the processor 250) a vibration frequency value to the vibration device IC 230 through the communication interface (e.g., the I2C bus 401) so that the vibration frequency of the vibration device 210 continuously increases or decreases. The vibration device IC 230 may acquire (or generate) a signal by using the processing circuit 410 and provide the acquired signal to the vibration device 210 so that the vibration device 210 vibrates at the vibration frequency. In an embodiment, the electronic device 200 (e.g., the processor 250) may continuously increase the vibration frequency of the vibration device 210 from a preconfigured minimum vibration frequency fₘᵢₙ to a preconfigured maximum vibration frequency fₘₐₓ. In an embodiment, the electronic device 200 (e.g., the processor 250) may continuously decrease the vibration frequency of the vibration device 210 from a preconfigured maximum vibration frequency fₘₐₓ to a preconfigured minimum vibration frequency fₘᵢₙ.

In an embodiment, in operation 803, the electronic device 200 may acquire a resonant frequency of the vibration device 210 based on a signal (e.g., a back-electromotive force, an impedance, or a magnetic field) output from the vibration device 210 while the vibration device 210 vibrates at the increased or decreased vibration frequency. In an embodiment, the electronic device 200 (e.g., the processor 250) may acquire a vibration frequency maximizing a vibration amount output from the vibration device 210 as the resonant frequency of the vibration device 210 while the vibration device 210 vibrates at the increased or decreased vibration frequency. In an embodiment, the electronic device 200 (e.g., the processor 250) may acquire a vibration frequency for maximizing a size of a back-electromotive force output from the vibration device 210 as the resonant frequency while the vibration device 210 vibrates at the increased or decreased vibration frequency. In an embodiment, the electronic device 200 (e.g., the processor 250) may acquire, by using the magnetic field sensor 240, a vibration frequency maximizing a size of a magnetic field output from the vibration device 210 as the resonant frequency while the vibration device 210 vibrates at the increased or decreased vibration frequency.

In an embodiment, in operation 805, the electronic device 200 may determine, based on the acquired resonant frequency, as the driving frequency of the vibration device 210, a vibration frequency at which an output of the vibration device 210 at a temperature higher than the room temperature is smaller than that of the vibration device at the room temperature. For example, the electronic device 200 (e.g., the processor 250) may determine a frequency within a range from the resonant frequency f₀ to the maximum vibration frequency fₘₐₓ as the driving frequency of the vibration device 210. In an embodiment, the electronic device 200 (e.g., the processor 250) may determine a vibration frequency greater than the resonant frequency acquired by the up-sweep method as the driving frequency of the vibration device 210 and store the determined driving frequency in the memory 260 (e.g., the EFS partition 500 in FIG. 5). The "up-sweep method" may be a method for acquiring a resonant frequency of the vibration device 210 by continuously increasing a vibration frequency of the vibration device 210. In an embodiment, the electronic device 200 (e.g., the processor 250) may determine a vibration frequency greater than the resonant frequency acquired by the down-sweep method as the driving frequency of the vibration device 210 and store the determined driving frequency in the memory 260 (e.g., the EFS partition 500 in FIG. 5). The electronic device 200 (e.g., the processor 250) may determine a vibration frequency greater than the real resonant frequency (e.g., f₀ in FIG. 6) of the vibration device 210 as the driving frequency of the vibration device 210 in consideration of an error with respect to the real resonant frequency (e.g., f₀ in FIG. 6) of the resonant frequency measured by the down-sweep method. The down-sweep method may be a method for acquiring a resonant frequency of the vibration device 210 by continuously decreasing a vibration frequency of the vibration device 210.

In an embodiment, in operation 807, the electronic device 200 may control the vibration device 210 to cause the vibration device 210 to be driven at the determined driving frequency. For example, the electronic device 200 (e.g., the processor 250) may transfer a driving frequency value to the vibration device IC 230 through the communication interface (e.g., the I2C bus 401) so that the vibration device 210 vibrates at the driving frequency. The vibration device IC 230 may acquire (or generate) a signal by using the processing circuit 410 and provide the acquired signal to the vibration device 210 so that the vibration device 210 vibrates at the driving frequency. In case that the vibration device 210 vibrates at the driving frequency according to the acquired signal, even if a temperature rises higher the room temperature, the vibration amount of the vibration device 210 may be output less than the maximum vibration amount at the room temperature and thus the vibration device 210 may be prevented from damage.

In an embodiment, in case that the resonant frequency of the vibration device 210 is acquired whenever the electronic device 200 (e.g., the processor 250) is booted (or turned on), a user may receive unintended vibration. A boot time of the electronic device 200 may be delayed due to resonant frequency calibration. In an embodiment, the electronic device 200 (e.g., the processor 250) may be realized to acquire a resonant frequency of the vibration device 210 by an independent process by using the resonant frequency acquisition module 272. For example, the electronic device 200 (e.g., the processor 250) may acquire a resonant frequency of the vibration device 210 during a process of replacing a damaged or defective vibration device 210 or a process of replacing a printed board assembly including a vibration device IC.

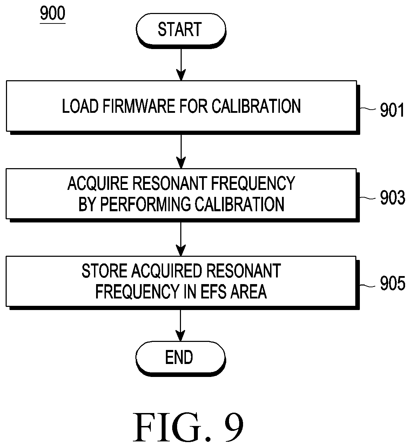

FIG. 9 is a flowchart 900 illustrating an example of an operation of acquiring a resonant frequency of a vibration device 210 by an electronic device 200 according to an embodiment of the disclosure.

In an embodiment, the electronic device 200 (e.g., the processor 250) may acquire a resonant frequency of the vibration device 210 by executing firmware (e.g., f₀ calibration application 521) for calibration and store the acquired resonant frequency in the memory 260 (e.g., the EFS partition 500).

In an embodiment, the operations shown in FIG. 9 are not limited to the described order and may be performed in various orders. In addition, according to an embodiment, more operations or fewer than those shown in FIG. 9 may be performed.

In an embodiment, in operation 901, the electronic device 200 may execute firmware for calibration. For example, the electronic device 200 (e.g., the processor 250) may load firmware (e.g., f₀ calibration application 521) included in the memory 260 (e.g., the resonant frequency acquisition module 272) to the memory 260.

In an embodiment, in operation 903, the electronic device 200 may acquire a resonant frequency by performing calibration for increasing or decreasing a vibration frequency of the vibration device 210. In an embodiment, the electronic device 200 (e.g., the processor 250) may increase or decrease the resonant frequency of the vibration device 210 for a preconfigured time (e.g., a sweep time) and may acquire the resonant frequency of the vibration device 210 based on a signal (e.g., a back-electromotive force, an impedance, or a magnetic field) output from the vibration device 210 while the vibration device 210 vibrates at the increased or decreased vibration frequency. In an embodiment, the electronic device 200 (e.g., the processor 250) may acquire a vibration frequency for maximizing a size of a vibration amount output from the vibration device 210 as the resonant frequency while the vibration device 210 vibrates at the increased or decreased vibration frequency. In an embodiment, the electronic device 200 (e.g., the processor 250) may acquire a vibration frequency for maximizing a size of a back-electromotive force output from the vibration device 210 as the resonant frequency while the vibration device 210 vibrates at the increased or decreased vibration frequency. In an embodiment, the electronic device 200 (e.g., the processor 250) may acquire, by using the magnetic field sensor 240, a vibration frequency maximizing a size of a magnetic field output from the vibration device 210 as the resonant frequency while the vibration device 210 vibrates at the increased or decreased vibration frequency.

In an embodiment, in operation 905, the electronic device 200 (e.g., the processor 250) may store the acquired resonant frequency in the memory 260 (e.g., the EFS partition 500). In an embodiment, the electronic device 200 may determine a driving frequency of the vibration device 210 based on the acquired resonant frequency and store the determined driving frequency in the memory 260 (e.g., the EFS partition 500). For example, the electronic device 200 (e.g., the processor 250) may determine a vibration frequency at which an output of the vibration device 210 at a temperature higher than room temperature is smaller than that at a room temperature as the driving frequency of the vibration device based on the resonant frequency acquired by the up-sweep method or the resonant frequency acquired by the down-sweep method. The electronic device 200 (e.g., the processor 250) may store the determined driving frequency in the memory 260 (e.g., the EFS partition 500).

In an embodiment, the electronic device 200 (e.g., the processor 250) may transfer the driving frequency of the vibration device 210 to the vibration device IC 230 by executing a vibration device driver (e.g., the vibrator driver 273) and firmware (e.g., the vibrator HAL module 512) so that the vibration device 210 is driven at the determined driving frequency.

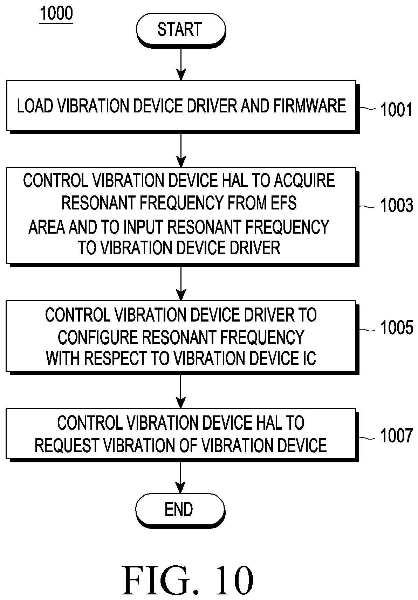

FIG. 10 is a flowchart 1000 illustrating an example of an operation of determining a driving frequency of a vibration device 210 by an electronic device 200 according to an embodiment.

In an embodiment, the operations shown in FIG. 10 are not limited to the described order and may be performed in various orders. In addition, according to an embodiment, more operations or fewer than those shown in FIG. 10 may be performed.

In an embodiment, in operation 1001, the electronic device 200 may execute a vibration device driver (e.g., the vibrator driver 273) and firmware (e.g., the vibrator HAL module 512). For example, the electronic device 200 (e.g., the processor 250) may load firmware (e.g., the vibrator HAL module 512) for transferring vibration data and the vibration device driver (e.g., the vibrator driver 273) stored in the memory 260 to the vibration device driver 273. In an embodiment, in operation 1003, the electronic device 200 (e.g., the processor 250) may control the firmware (e.g., the vibrator HAL module 512) to acquire a resonant frequency (or driving frequency) value stored in the memory 260 and the resonant frequency (or driving frequency) value to be input to the vibration device driver (e.g., the vibrator driver 273). In an embodiment, in operation 1005, the electronic device 200 (e.g., the processor 250) may control the vibration device driver (e.g., the vibrator driver 273) to configure a resonant frequency (or driving frequency) with respect to the vibration device IC 230.

In an embodiment, in operation 1007, the electronic device 200 (e.g., the processor 250) may control the firmware 512 (e.g., the vibrator HAL module 512) to request vibration of the vibration device 210 to the vibration device driver 273 (e.g., the vibrator driver 273). Based on the request, the vibration device driver 273 may control the vibration device IC 230 to acquire (or generate) a driving signal according to the configured resonant frequency (or driving frequency) to drive the vibration device 210. In case that the vibration device 210 vibrates at the resonant frequency (or driving frequency), even if a temperature rises higher the room temperature, the outputted vibration amount of the vibration device 210 may be less than the maximum vibration amount at the room temperature and thus the vibration device 210 may be prevented from damage.

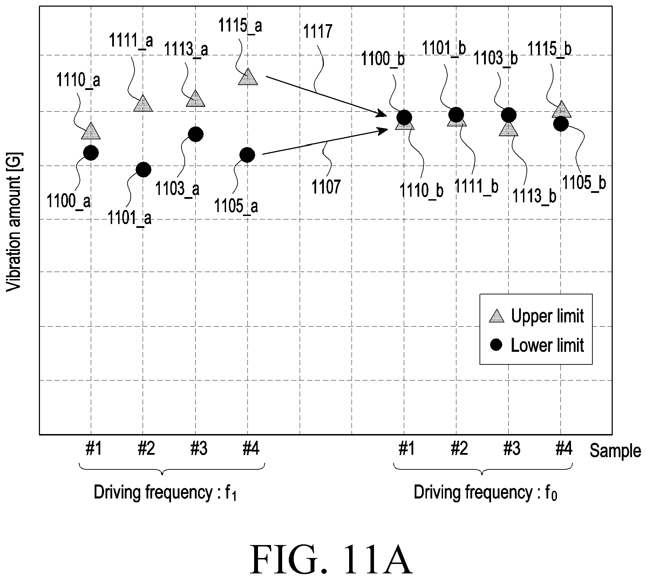

FIG. 11A is a view illustrating an example of changing of vibration force according to an operation of an electronic device according to an embodiment of the disclosure.

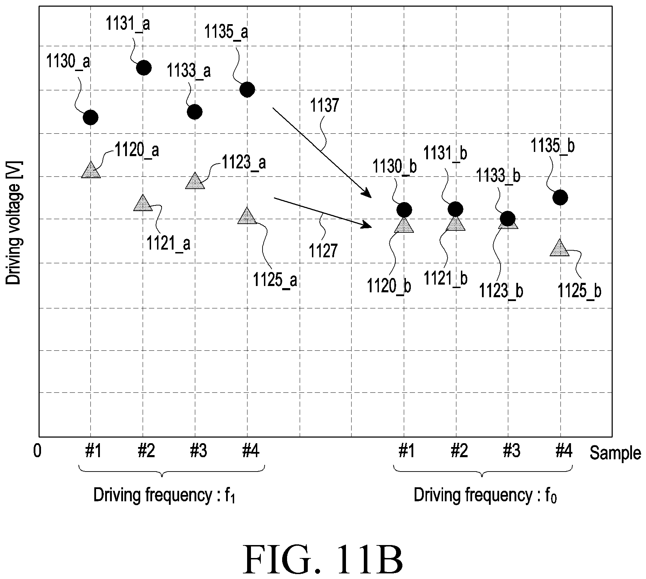

FIG. 11B is a view illustrating an example of changing of a driving voltage according to an operation of an electronic device according to an embodiment of the disclosure.

Hereinafter, a change in vibration amount and driving voltage due to an operation of the electronic device 200 according to an embodiment will be described.

Referring to FIG. 11A, in case that the vibration device 210 of first to fourth samples #1, #2, #3, and #4 vibrates at a fixed driving frequency f₁ smaller than a resonant frequency f₀, deviations between upper limits 1 1 10_a, 1111_a, 11 13_a, and 1115_a of the vibration amount and lower limits 1100_a, 1101_a, 1103_a, and 1105_a of the vibration amount may exist. In an embodiment, the fixed driving frequency f₁ lower than the resonant frequency (e.g., f₀ in FIG. 6) may be the frequency f₁ in FIG. 6. For example, the fixed driving frequency f₁ lower than the resonant frequency may have a value of 150 Hz. The value of the fixed driving frequency f₁ is not limited the above-described example. Referring to FIG. 11A again, in an embodiment, in case that the vibration device 210 of first to fourth samples #1, #2, #3, and #4 vibrates at the resonant frequency f₀, upper limits 1110_a, 1111_a, 1113_a, and 1115_a of the vibration amount may decrease 1117 and lower limits 1100_a, 1101_a, 1103_a, and 1105_a of the vibration amount may increase 1107. In an embodiment, resonant frequencies measured with respect to the first to fourth samples #1, #2, #3, and #4 at a room temperature may have different values due to a difference of a motor (e.g., the motor 300 in FIG. 3) or a set. In an embodiment, a resonant frequency measured with respect to each sample may be in proportion to a square root of stiffness of an elastic member (e.g., the elastic member 340 in FIG. 3) and in inverse proportion to a square root of a mass of the motor 300. The deviations between the upper limits 1110_b, 1111_b, 1113_b, and 1115_b and the lower limits 1100_b, 1101_b, 1103_b, and 1105_b of the vibration amount may be remarkably decreased in case that the vibration device 210 of the first to fourth sample #1, #2, #3, and #4 vibrates at the resonant frequency f₀. In an embodiment, the resonant frequency of the vibration device 210 may include the real resonant frequency (e.g., f₀ in FIG. 6) of the vibration device 210 and a resonant frequency acquired by the up-sweep method. In an embodiment, the electronic device 200 (e.g., the processor 250) may provide a compensation voltage to the vibration device 210 so that the vibration device 210 outputs a vibration amount within a predetermined range while vibrating at the resonant frequency f₀ or the driving frequency f₁.

Referring to FIG. 11B, in case that the vibration device 210 of first to fourth samples #1, #2, #3, and #4 vibrates at a fixed driving frequency f₁ lower than a resonant frequency (e.g., f₀ in FIG. 6), deviations between upper limits 1120_a, 1121_a, 1123_a, and 1125_a and lower limits 1130_a, 1131_a, 1133_a, and 1135_a of the driving voltage may exist. With respect to efficiency of the vibration device 210 of the first to fourth samples #1, #2, #3, and #4 in case that the vibration device 210 vibrates at the fixed driving frequency f₁ lower than the resonant frequency (e.g., f₀ in FIG. 6), a driving voltage in the lower limits 1130_a, 1131_a, 1133_a, and 1135_a of the vibration force may excessively increase. A driving voltage difference between vibration force upper limit 1120_b, 1121_b, 1123_b, and 1125_b and lower limit 1130_b, 1131_b, 1133_b, and 1135_b samples may be remarkably reduced 1137 and 1127 in case that the vibration device 210 vibrates at the resonant frequency f₀.

In an embodiment, referring to Figs. 11A and 11B, when the the resonant frequency f₀ is used instead of a fixed driving frequency f₁ smaller than f₀, more stable vibrations, more stable driving voltage, and/or less current consumption may be possible. These effects may occur even if the temperature is above room temperature.

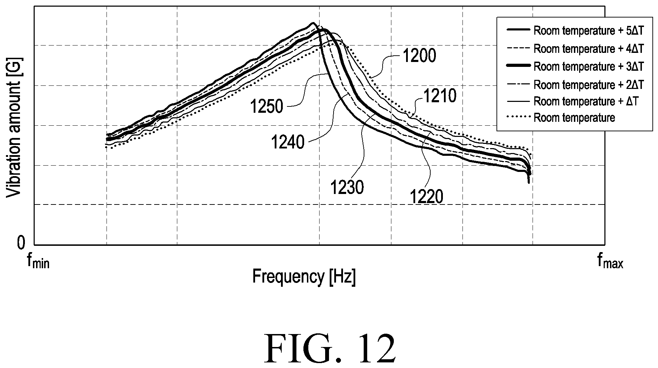

FIG. 12 is a graph illustrating an example of changing of vibration force according to a vibration frequency for each temperature according to an embodiment of the disclosure.

Referring to 12, in an embodiment, as a temperature variance increases at a room temperature, the resonant frequency of the vibration device 210 may become lower and the maximum vibration amount may increase. In an embodiment, referring to a vibration amount curve 1200 of the vibration device 210 with respect to the vibration frequency at a room temperature and each of vibration amount curves 1210, 1220, 1230, 1240, and 1250 of the vibration device 210 with respect to the vibration frequency at temperatures higher than room temperature by predetermined temperatures ΔT, 2ΔT, 3ΔT, 4ΔT, and 5ΔT, as a temperature rises the maximum vibration amount of the vibration device 210 may increase and the resonant frequency may decrease.

In an embodiment, the electronic device 200 may determine a frequency higher than the resonant frequency (e.g., f₀ in FIG. 6) as the driving frequency of the vibration device 210 at a room temperature to prevent the vibration device 210 from damage due to an excessive increase of the vibration amount at a high temperature. In an embodiment, a relationship between the vibration frequency for each temperature and the vibration amount may be prestored in the memory 260.

Although not shown in the drawing, the driving voltage of the vibration device 210 may have a certain relationship according to the driving frequency for each temperature and the relationship between the driving voltage and the driving frequency for each temperature may be prestored in the memory 260.

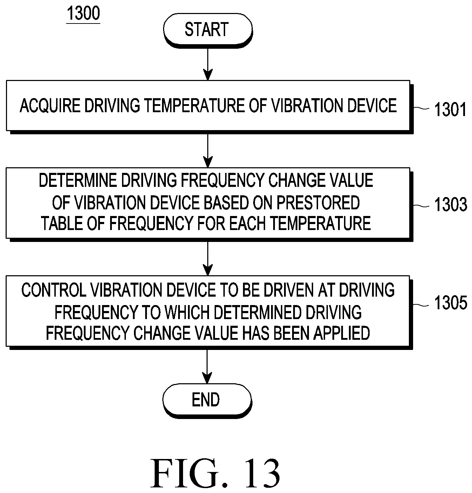

FIG. 13 is a flowchart 1300 illustrating an example of an operation of controlling a driving frequency of a vibration device 210 based on acquisition of a driving temperature of the vibration device 210 according to an embodiment of the disclosure.

In an embodiment, the electronic device 200 (e.g., the processor 250) may determine (or adjust) a driving frequency the vibration device 210 in response to acquisition of the driving temperature of the vibration device 210.

According to an embodiment, the operations shown in FIG. 13 are not limited to the described order and may be performed in various orders. In addition, according to an embodiment, more operations or fewer than those shown in FIG. 13 may be performed.

In an embodiment, in operation 1301, the electronic device 200 may acquire a driving temperature of the vibration device 210. For example, the electronic device 200 (e.g., the processor 250) may acquire the driving temperature of the vibration device 210 by using the temperature sensor 220 while the vibration device 210 vibrates.

According to an embodiment, in operation 1303, the electronic device 200 may determine a driving frequency change value of the vibration device 210 based on a prestored table including a frequency (or, "table of frequency") for each temperature. For example, the electronic device 200 (e.g., the processor 250) may acquire the table including a frequency for each temperature prestored in the memory 260 in response to acquisition of the driving temperature. The table including a frequency for each temperature may correspond to data expressing relationship between a driving frequency for each temperature and a vibration amount of the vibration device 210 in the form of a table shown in FIG. 12. In case that a vibration frequency smaller than the resonant frequency of the vibration device 210 at a room temperature is determined as the driving frequency, the electronic device 200 (e.g., the processor 250) may adjust the driving frequency so that the driving frequency is reduced in proportion to an increase in the driving temperature with respect to the room temperature.

In an embodiment, in operation 1305, the electronic device 200 may control the vibration device to cause the vibration device 210 to be driven at the driving frequency to which the determined driving frequency change value has been applied. For example, the electronic device 200 (e.g., the processor 250) may transfer the driving frequency to which the determined driving frequency change value has been applied, to the vibration device IC 230. The vibration device IC 230 may acquire (or generate) a driving signal of the vibration device 210 based on the acquired driving frequency. The vibration device 210 may vibrate at the driving frequency according to the acquired driving signal. The electronic device 200 (e.g., the processor 250) may maintain vibration force of the vibration device 210 to be constant even at high temperature by reducing the driving frequency in proportion to an increase amount of the driving temperature of the vibration device 210.

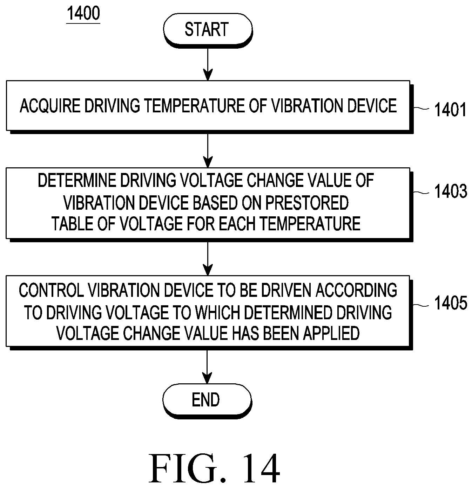

FIG. 14 is a flowchart 1400 illustrating an example of an operation of controlling a driving voltage of a vibration device 210 based on acquisition of a driving temperature of the vibration device 210 according to an embodiment of the disclosure.

In an embodiment, the operations shown in FIG. 14 are not limited to the described order and may be performed in various orders. In addition, according to an embodiment, more operations or fewer than those shown in FIG. 14 may be performed.

In an embodiment, the electronic device 200 (e.g., the processor 250) may determine (or adjust) a driving voltage of the vibration device 210 in response to acquisition of the driving temperature of the vibration device 210.

In an embodiment, in operation 1401, the electronic device 200 may acquire a driving temperature of the vibration device 210. For example, the electronic device 200 (e.g., the processor 250) may acquire the driving temperature of the vibration device 210 by using the temperature sensor 220 while the vibration device 210 vibrates.

In an embodiment, in operation 1403, the electronic device 200 may determine a driving voltage change value of the vibration device 210 based on a prestored table including a voltage (or, "table of voltage") for each temperature. For example, the electronic device 200 (e.g., the processor 250) may acquire the table including a voltage for each temperature prestored in the memory 260 in response to acquisition of the driving temperature. The table including a voltage for each temperature may correspond to data expressing relationship between a driving frequency for each temperature and a driving voltage of the vibration device 210 in the form of a table as described above with reference to FIG. 12. In case that a vibration frequency smaller than the resonant frequency of the vibration device 210 at a room temperature is determined as the driving frequency, the electronic device 200 (e.g., the processor 250) may determine a driving frequency so that the driving voltage is reduced in proportion to an increase in the driving temperature with respect to the room temperature.

In an embodiment, in operation 1405, the electronic device 200 may control the vibration device 210 to cause the vibration device 210 to be driven according to the driving voltage to which the determined driving voltage change value has been applied. For example, the electronic device 200 (e.g., the processor 250) may transfer the driving voltage to which the determined driving voltage change value has been applied, to the vibration device IC 230. The vibration device IC 230 may acquire (or generate) a driving signal of the vibration device 210 based on the acquired driving voltage. The vibration device 210 may vibrate at the driving voltage according to the acquired driving signal. The electronic device 200 (e.g., the processor 250) may maintain vibration force of the vibration device 210 to be constant even at high temperature by reducing the driving voltage in proportion to an increase in the driving temperature of the vibration device 210.

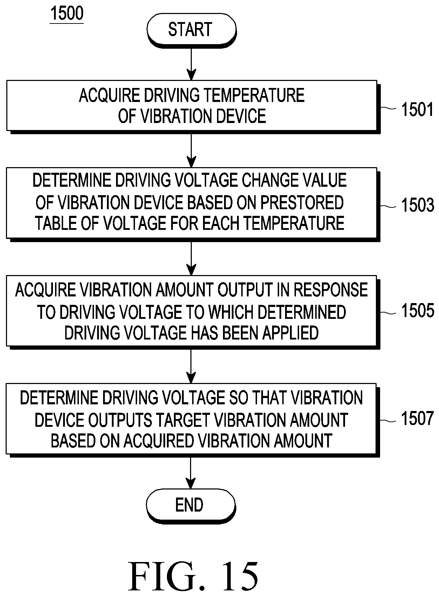

FIG. 15 is a flowchart 1500 illustrating an example of an operation of controlling a driving voltage of a vibration device to cause the vibration device 210 to output a target vibration amount according to an embodiment of the disclosure.

In an embodiment, the electronic device 200 (e.g., the processor 250) may determine (or adjust) a driving voltage of the vibration device 210 in response to acquisition of the driving temperature of the vibration device 210 and the vibration amount output from the vibration device 210.

In an embodiment, the operations shown in FIG. 15 are not limited to the described order and may be performed in various orders. In addition, according to an embodiment, more operations or fewer than those shown in FIG. 15 may be performed.

In an embodiment, in operation 1501, the electronic device 200 may acquire a driving temperature of the vibration device 210. For example, the electronic device 200 (e.g., the processor 250) may acquire the driving temperature of the vibration device 210 by using the temperature sensor 220 while the vibration device 210 vibrates.

In an embodiment, in operation 1503, the electronic device 200 may determine a driving voltage change value of the vibration device 210 based on a prestored table including a voltage for each temperature. For example, the electronic device 200 (e.g., the processor 250) may acquire the table including a voltage for each temperature prestored in the memory 260 in response to acquisition of the driving temperature. In case that a vibration frequency smaller than the resonant frequency of the vibration device 210 at a room temperature is determined as the driving frequency, the electronic device 200 (e.g., the processor 250) may determine a driving frequency so that the driving voltage is reduced in proportion to an increase in the driving temperature with respect to the room temperature.

In an embodiment, in operation 1505, the electronic device 200 may acquire a vibration amount output from the vibration device 210 in response to the driving voltage to which the determined driving voltage change value has been applied. For example, the electronic device 200 (e.g., the processor 250) may acquire an electrical signal incurred by vibration of the vibration device 210, by using an acceleration sensor (not shown) (e.g., the sensor module 176) and acquire a vibration amount of the vibration device 210 based on the electrical signal. In an embodiment, the electronic device 200 (e.g., the processor 250) may acquire a back-electromotive force or an impedance of the vibration device 210 and acquire a vibration amount.

In an embodiment, in operation 1507, the electronic device 200 may determine a driving voltage for causing the vibration device 210 to output a target vibration amount based on the acquired vibration amount. For example, in case that a vibration amount the vibration device 210 increases compared to the target vibration amount, the electronic device 200 (e.g., the processor 250) may reduce a driving voltage of the vibration device 210 in proportion to an increase in the vibration amount with respect to the target vibration amount. The electronic device 200 (e.g., the processor 250) may transfer the reduced driving voltage to the vibration device IC 230. The vibration device IC 230 may acquire (or generate) a driving signal of the vibration device 210 based on the acquired driving voltage. The vibration device 210 may vibrate at the driving voltage according to the acquired driving signal. The electronic device 200 (e.g., the processor 250) may maintain vibration force of the vibration device 210 to be constant even at high temperature by reducing the driving voltage in proportion to an increase in the vibration amount of the vibration device 210.

An embodiment may provide an electronic device (e.g., the electronic device 200 in FIG. 2) including a vibration device (e.g., the vibration device 210 in FIG. 2), at least one processor (e.g., the processor 250 in FIG. 2) electrically connected to the vibration device (e.g., the vibration device 210 in FIG. 2), and a memory (e.g., the memory 130 in FIG. 1 and/or the memory 260 in FIG. 2) storing instructions. There may be provided the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to increase or decrease a vibration frequency of the vibration device (e.g., the vibration device 210 in FIG. 2) during a predetermined time. There may be provided the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to acquire a resonant frequency of the vibration device (e.g., the vibration device 210 in FIG. 2) based on a signal output from the vibration device (e.g., the vibration device 210 in FIG. 2) while the vibration device (e.g., the vibration device 210 in FIG. 2) vibrates at the increased or decreased vibration frequency. There may be provided the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to determine, as a driving frequency of the vibration device (e.g., the vibration device 210 in FIG. 2), a vibration frequency at which an output of the vibration device (e.g., the vibration device 210 in FIG. 2) at a temperature higher than room temperature is smaller than that at a room temperature, based on the resonant frequency. There may be provided the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to control the vibration device (e.g., the vibration device 210 in FIG. 2) such that the vibration device (e.g., the vibration device 210 in FIG. 2) is driven at the determined driving frequency.

An embodiment may provide the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to continuously increase the vibration frequency from a preconfigured minimum vibration frequency to a preconfigured maximum vibration frequency.

An embodiment may provide the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to acquire, as the resonant frequency, a vibration frequency for maximizing a size of a back-electromotive force output from the vibration device (e.g., the vibration device 210 in FIG. 2) while the vibration device (e.g., the vibration device 210 in FIG. 2) vibrates at the increased or decreased vibration frequency.

An embodiment may provide the electronic device (e.g., the electronic device 200 in FIG. 2) further including a magnetic field sensor (e.g., the magnetic field sensor 240 in FIG. 2) configured to convert a strength of a magnetic field output from the vibration device (e.g., the vibration device 210 in FIG. 2) into a form of voltage. There may be provided the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to acquire, as the resonant frequency, a vibration frequency for maximizing a size of a voltage converted by the magnetic field sensor (e.g., the magnetic sensor 240 in FIG. 2).

An embodiment may provide the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to store the acquired driving frequency in the memory (e.g., the memory 260 in FIG. 2).

An embodiment may provide the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to determine a vibration frequency within a range from the acquired resonant frequency to a preconfigured maximum vibration frequency as the driving frequency.

An embodiment may provide the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to acquire a driving temperature of the vibration device (e.g., the vibration device 210 in FIG. 2). There may be provided the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to acquire a driving frequency change value of the vibration device (e.g., the vibration device 210 in FIG. 2) based on the driving temperature and a prestored table including a frequency for each temperature. There may be provided the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to control the vibration device (e.g., the vibration device 210 in FIG. 2) such that the vibration device (e.g., the vibration device 210 in FIG. 2) is driven at a driving frequency to which the acquired driving frequency change value has been applied.

An embodiment may provide the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to acquire a driving temperature of the vibration device (e.g., the vibration device 210 in FIG. 2). There may be provided the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to acquire a driving voltage change value of the vibration device (e.g., the vibration device 210 in FIG. 2) based on the driving temperature and a prestored table including a voltage for each temperature. There may be provided the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to control the vibration device (e.g., the vibration device 210 in FIG. 2) such that the vibration device (e.g., the vibration device 210 in FIG. 2) is driven according to a driving voltage to which the acquired driving voltage change value has been applied.

An embodiment may provide the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to acquire a vibration amount output from the vibration device (e.g., the vibration device 210 in FIG. 2) in response to the driving voltage to which the acquired driving voltage change value has been applied.

An embodiment may provide the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to determine a driving voltage for causing the vibration device (e.g., the vibration device 210 in FIG. 2) to output a target vibration amount based on the acquired vibration amount.

An embodiment may provide the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to control the vibration device (e.g., the vibration device 210 in FIG. 2) such that the vibration device (e.g., the vibration device 210 in FIG. 2) is driven according to the determined driving voltage.

An embodiment may provide the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to adjust the driving frequency such that the driving frequency is reduced in proportion to an increase in the driving temperature with respect to the room temperature in case that a vibration frequency smaller than the resonant frequency is determined as the driving frequency. There may be provided the electronic device (e.g., the electronic device 200 in FIG. 2), wherein the instructions, when executed by the at least one processor (e.g., the processor 250 in FIG. 2), cause the electronic device (e.g., the electronic device 200 in FIG. 2) to control the vibration device (e.g., the vibration device 210 in FIG. 2) such that the vibration device (e.g., the vibration device 210 in FIG. 2) is driven at the adjusted driving frequency.

An operation method of an electronic device (e.g., the electronic device 200 in FIG. 2) according to an embodiment of the disclosure may include an operation of increasing or decreasing a vibration frequency of a vibration device (e.g., the vibration device 210 in FIG. 2) during a preconfigured time. The operation method of the electronic device (e.g., the electronic device 200 in FIG. 2) may include an operation of acquiring a resonant frequency of the vibration device (e.g., the vibration device 210 in FIG. 2) based on a signal output from the vibration device (e.g., the vibration device 210 in FIG. 2) while the vibration device (e.g., the vibration device 210 in FIG. 2) vibrates at the increased or decreased vibration frequency. The operation method of the electronic device (e.g., the electronic device 200 in FIG. 2) may include an operation of determining, as a driving frequency of the vibration device (e.g., the vibration device 210 in FIG. 2), a vibration frequency at which an output of the vibration device (e.g., the vibration device 210 in FIG. 2) at a temperature higher than room temperature is smaller than that at a room temperature, based on the resonant frequency. The operation method of the electronic device (e.g., the electronic device 200 in FIG. 2) may include an operation of controlling the vibration device (e.g., the vibration device 210 in FIG. 2) so that the vibration device (e.g., the vibration device 210 in FIG. 2) is driven at the determined driving frequency.

In an embodiment, the operation of increasing or decreasing the vibration frequency may include an operation of continuously increasing the vibration frequency from a preconfigured minimum vibration frequency to a preconfigured maximum vibration frequency.

In an embodiment, the operation of acquiring the resonant frequency of the vibration device may include an operation of acquiring, as the resonant frequency, a vibration frequency for maximizing a size of a back-electromotive force output from the vibration device (e.g., the vibration device 210 in FIG. 2) while the vibration device (e.g., the vibration device 210 in FIG. 2) vibrates at the increased or decreased vibration frequency.

In an embodiment, the operation of acquiring the resonant frequency of the vibration device (e.g., the vibration device 210 in FIG. 2) may include an operation of acquiring, as the resonant frequency, a vibration frequency for maximizing a size of a voltage converted by the magnetic field sensor (e.g., the magnetic sensor 240 in FIG. 2) configured to convert a strength of a magnetic field output from the vibration device (e.g., the vibration device 210 in FIG. 2) into a form of voltage.

In an embodiment, the operation method of the electronic device (e.g., the electronic device 200 in FIG. 2) may further include an operation of storing the acquired driving frequency in a memory (e.g., the memory 260 in FIG. 2).

In an embodiment, the operation of determining, as a driving frequency of the vibration device (e.g., the vibration device 210 in FIG. 2), a vibration frequency at which an output of the vibration device (e.g., the vibration device 210 in FIG. 2) at a temperature higher than room temperature is smaller than that at a room temperature may include an operation of determining a vibration frequency within a range from the acquired resonant frequency to a preconfigured maximum vibration frequency as the driving frequency.

In an embodiment, the operation method of the electronic device (e.g., the electronic device 200 in FIG. 2) may further include an operation of acquiring a driving temperature of the vibration device (e.g., the vibration device 210 in FIG. 2). In an embodiment, the operation method of the electronic device (e.g., the electronic device 200 in FIG. 2) may further include an operation of acquiring a driving frequency change value of the vibration device (e.g., the vibration device 210 in FIG. 2) based on the driving temperature and a prestored table including a frequency for each temperature. The operation method of the electronic device (e.g., the electronic device 200 in FIG. 2) may further include an operation of controlling the vibration device (e.g., the vibration device 210 in FIG. 2) such that the vibration device (e.g., the vibration device 210 in FIG. 2) is driven at a driving frequency to which the acquired driving frequency change value has been applied.

In an embodiment, the operation method of the electronic device (e.g., the electronic device 200 in FIG. 2) may further include an operation of acquiring a driving temperature of the vibration device (e.g., the vibration device 210 in FIG. 2). In an embodiment, the operation method of the electronic device (e.g., the electronic device 200 in FIG. 2) may further include an operation of acquiring a driving voltage change value of the vibration device (e.g., the vibration device 210 in FIG. 2) based on the driving temperature and a prestored table of voltage for each temperature. The operation method of the electronic device (e.g., the electronic device 200 in FIG. 2) may further include an operation of controlling the vibration device (e.g., the vibration device 210 in FIG. 2) so that the vibration device (e.g., the vibration device 210 in FIG. 2) is driven according to a driving voltage to which the acquired driving voltage change value has been applied.

In an embodiment, the operation method of the electronic device (e.g., the electronic device 200 in FIG. 2) may further include an operation of acquiring a vibration amount output from the vibration device (e.g., the vibration device 210 in FIG. 2) in response to the driving voltage to which the acquired driving voltage change value has been applied. In an embodiment, the operation method of the electronic device (e.g., the electronic device 200 in FIG. 2) may further include an operation of determining a driving voltage for causing the vibration device (e.g., the vibration device 210 in FIG. 2) to output a target vibration amount based on the acquired vibration amount. The operation method of the electronic device (e.g., the electronic device 200 in FIG. 2) may further include an operation of controlling the vibration device (e.g., the vibration device 210 in FIG. 2) so that the vibration device (e.g., the vibration device 210 in FIG. 2) is driven according to the determined driving voltage.

In case that a vibration frequency smaller than the resonant frequency is determined as the driving frequency, the operation method of the electronic device (e.g., the electronic device 200 in FIG. 2) may further include an operation of adjusting the driving frequency such that the driving frequency is reduced in proportion to an increase in the driving temperature with respect to the room temperature.

The operation method of the electronic device (e.g., the electronic device 200 in FIG. 2) may further include an operation of controlling the vibration device (e.g., the vibration device 210 in FIG. 2) so that the vibration device (e.g., the vibration device 210 in FIG. 2) is driven according to the adjusted driving frequency.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", ***"coupled to", "connected with",*** or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

In addition, the structure of data used in an embodiment of the disclosure may be recorded in a non-transitory computer-readable recording medium through various means. The computer-readable recording medium may include recording media such as magnetic recording media (for example, ROM, a floppy disk, a hard disk, and the like) and optical reading media (for example, CD-ROM, DVD, and the like).

While the disclosure has been particularly shown and described with reference to exemplary embodiments thereof, it will be understood by those skilled in the art that various changes in form and details may be made therein without departing from the spirit and scope of the disclosure as defined by the appended claims. Therefore, the disclosed embodiments should be considered in an illustrative sense rather than a restrictive sense. It should be understood that the scope of the disclosure falls within the appended claims, not in the detailed description, and all changes within the equivalent range are included in the disclosure.

## Claims

1. An electronic device (101; 200) comprising:
a vibration device (179; 210; 300);
at least one processor (120; 250) electrically connected to the vibration device (179; 210; 300); and
a memory storing instructions,
wherein the instructions, when executed by the at least one processor (120; 250), cause the electronic device (101; 200) to:
increase or decrease a vibration frequency of the vibration device (179; 210; 300) during a preconfigured time;
acquire a resonant frequency of the vibration device (179; 210; 300) based on a signal output from the vibration device (179; 210; 300) while the vibration device (179; 210; 300) vibrates at the increased or decreased vibration frequency;
determine, based on the acquired resonant frequency, as a driving frequency of the vibration device (179; 210; 300), a vibration frequency at which an output of the vibration device (179; 210; 300) at a temperature higher than a room temperature is smaller than that at the room temperature; and
control the vibration device (179; 210; 300) so that the vibration device (179; 210; 300) is driven at the determined driving frequency.

2. The electronic device (101; 200) of claim 1, wherein the instructions, when executed by the at least one processor (120; 250), cause the electronic device (101; 200) to continuously increase the vibration frequency from a preconfigured minimum vibration frequency to a preconfigured maximum vibration frequency.

3. The electronic device (101; 200) of claim 1 or claim 2, wherein the instructions, when executed by the at least one processor (120; 250), cause the electronic device (101; 200) to acquire, as the resonant frequency, a vibration frequency at which a size of a back-electromotive force output from the vibration device (179; 210; 300) is maximized, while the vibration device (179; 210; 300) vibrates at the increased or decreased vibration frequency.

4. The electronic device (101; 200) of any of claims 1-3, further comprising a magnetic field sensor (176; 240) configured to convert a strength of a magnetic field output from the vibration device (179; 210; 300) into a form of voltage,
wherein the instructions, when executed by the at least one processor (120; 250), cause the electronic device (101; 200) to acquire, as the resonant frequency, a vibration frequency at which a size of a voltage converted by the magnetic field sensor (176; 240) is maximized.

5. The electronic device (101; 200) of any of claims 1-4, wherein the instructions, when executed by the at least one processor (120; 250), cause the electronic device (101; 200) to store the acquired driving frequency in the memory (130; 260).

6. The electronic device (101; 200) of any of claims 1-5, wherein the instructions, when executed by the at least one processor (120; 250), cause the electronic device (101; 200) to determine a vibration frequency within a range from the acquired resonant frequency to a preconfigured maximum vibration frequency as the driving frequency.

7. The electronic device (101; 200) of any of claims 1-6, wherein the instructions, when executed by the at least one processor (120; 250), cause the electronic device (101; 200) to:
acquire a driving temperature of the vibration device (179; 210; 300);
acquire a driving frequency change value of the vibration device (179; 210; 300) based on the driving temperature and a prestored table including a frequency for each temperature; and
control the vibration device (179; 210; 300) so that the vibration device (179; 210; 300) is driven at a driving frequency to which the acquired driving frequency change value has been applied.

8. The electronic device (101; 200) of any of claims 1-7, wherein the instructions, when executed by the at least one processor (120; 250), cause the electronic device (101; 200) to:
acquire a driving temperature of the vibration device (179; 210; 300);
acquire a driving voltage change value of the vibration device (179; 210; 300) based on the driving temperature and a prestored table including a voltage for each temperature; and
control the vibration device (179; 210; 300) so that the vibration device (179; 210; 300) is driven according to a driving voltage to which the acquired driving voltage change value has been applied.

9. The electronic device (101; 200) of any of claims 1-8, wherein the instructions, when executed by the at least one processor (120; 250), cause the electronic device (101; 200) to:
acquire a vibration amount output from the vibration device (179; 210; 300) in response to the driving voltage to which the acquired driving voltage change value has been applied;
determine a driving voltage which causes the vibration device (179; 210; 300) to output a target vibration amount based on the acquired vibration amount; and
control the vibration device (179; 210; 300) so that the vibration device (179; 210; 300) is driven according to the determined driving voltage.

10. The electronic device (101; 200) of any of claims 1-9, wherein the instructions, when executed by the at least one processor (120; 250), cause the electronic device (101; 200) to:
in case that a vibration frequency smaller than the resonant frequency is determined as the driving frequency, adjust the driving frequency so that the driving frequency is reduced in proportion to an increase in the driving temperature with respect to the room temperature; and
control the vibration device (179; 210; 300) so that the vibration device (179; 210; 300) is driven at the adjusted driving frequency.

11. An operation method of an electronic device (101; 200), the operation method comprising:
increasing or decreasing a vibration frequency of a vibration device (179; 210; 300) during a preconfigured time;
acquiring a resonant frequency of the vibration device (179; 210; 300) based on a signal output from the vibration device (179; 210; 300) while the vibration device (179; 210; 300) vibrates at the increased or decreased vibration frequency;
determining, based on the acquired resonant frequency, as a driving frequency of the vibration device (179; 210; 300), a vibration frequency at which an output of the vibration device (179; 210; 300) at a temperature higher than a room temperature is smaller than that at the room temperature; and
controlling the vibration device (179; 210; 300) so that the vibration device (179; 210; 300) is driven at the determined driving frequency.

12. The operation method of claim 11, wherein the increasing or decreasing of the vibration frequency comprises continuously increasing the vibration frequency from a preconfigured minimum vibration frequency to a preconfigured maximum vibration frequency.

13. The operation method of claim 11 or claim 12, wherein the acquiring of the resonant frequency of the vibration device (179; 210; 300) comprises acquiring, as the resonant frequency, a vibration frequency at which a size of a back-electromotive force output from the vibration device (179; 210; 300) is maximized, while the vibration device (179; 210; 300) vibrates at the increased or decreased vibration frequency.

14. The operation method of any of claims 11-13, wherein the acquiring of the resonant frequency of the vibration device (179; 210; 300) comprises acquiring, as the resonant frequency, a vibration frequency at which a size of a voltage converted by a magnetic field sensor (176; 240) configured to convert a strength of a magnetic field output from the vibration device (179; 210; 300) into a form of voltage is maximized.

15. The operation method of any of claims 11-14, further comprising storing the acquired driving frequency in a memory (130; 260).
